(19) Europäisches Patentamt / European Patent Office / Office européen des brevets

(11) **EP 1 327 342 B1**

(12) **EUROPÄISCHE PATENTSCHRIFT**

(45) Veröffentlichungstag und Bekanntmachung des Hinweises auf die Patenterteilung:
**12.12.2012 Patentblatt 2012/50**

(51) Int Cl.:
*H04L 25/02* (2006.01)     *H04L 25/03* (2006.01)

(21) Anmeldenummer: **00984827.6**

(86) Internationale Anmeldenummer:
**PCT/DE2000/003604**

(22) Anmeldetag: **13.10.2000**

(87) Internationale Veröffentlichungsnummer:
**WO 2002/032065 (18.04.2002 Gazette 2002/16)**

(54) **AUS MEHREREN ZEITLICH ZURÜCKLIEGENDEN KANALSCHÄTZUNGEN VORHERGESAGTE KANALSCHÄTZUNG ZUR VORENTZERRUNG**

CHANNEL ESTIMATE PREDICTED FROM SEVERAL PREVIOUS CHANNEL ESTIMATES, FOR PRE-EQUALIZATION

ESTIMATION DE CANAL EFFECTUEE A PARTIR DE PLUSIEURS ESTIMATIONS DE CANAL ANTERIEURES ET SERVANT A UN PRECORRECTION

(84) Benannte Vertragsstaaten:
**DE FR GB IT**

(43) Veröffentlichungstag der Anmeldung:
**16.07.2003 Patentblatt 2003/29**

(73) Patentinhaber: **IPCom GmbH & Co. KG
82049 Pullach (DE)**

(72) Erfinder:
• **KOWALEWSKI, Frank
38228 Salzgitter (DE)**
• **MANGOLD, Peter
30173 Hannover (DE)**

(74) Vertreter: **Gigerich, Jan et al
Frohwitter
Patent- und Rechtsanwälte
Postfach 86 03 68
81630 München (DE)**

(56) Entgegenhaltungen:
DE-A- 19 747 369     DE-A- 19 747 457
DE-A- 19 818 215     DE-A- 19 909 921

• DONG GENN JEONG ET AL: "Effects of channel estimation error in MC-CDMA/TDD systems" IEEE 51ST VEHICULAR TECHNOLOGY CONFERENCE PROCEEDINGS , Bd. 3, 15. - 18. Mai 2000, Seiten 1773-1777 , XP002170626 IEEE, Piscataway, NJ, USA ISBN: 0-7803-5718-3

EP 1 327 342 B1

**Beschreibung**

STAND DER TECHNIK

Die vorliegende Erfindung betrifft ein Datenübertragungverfahren, bei dem ein Datensignal in Form eines Datenstroms von Datenbursts zwischen einem Sender und einem Empfänger übertragen wird, sowie eine entsprechende Datenübertragungsvorrichtung.

Obwohl prinzipiell auf beliebige Datenübertragungen anwendbar, werden die vorliegende Erfindung sowie die ihr zu Grunde liegende Problematik in Bezug auf ein zellulares CDMA-Datenübertragungssystem (CDMA = Code Division Multiple Access) erläutert.

Insbesondere lassen sich durch Code-Vielfachzugriff (CDMA = Code Division Multiple Access) mehrere Datenströme gleichzeitig über ein gemeinsames Frequenzband übertragen, wie z.B. aus K. D. Kammeyer, Nachrichtenübertragung, 2. Aufl., Reihe Informationstechnik, Teubner, Stuttgart, 1996 bekannt.

Beim Code-Vielfachzugriff erfolgt eine gleichzeitige übertragung mehrerer Daten durch Kodierung der Daten mit möglichst unkorrelierten Codes und Überlagerung der kodierten Signale.

Bei der Übertragung von Daten stören sich i.a. aufeinanderfolgend oder gleichzeitig versendete Daten gegenseitig, d.h. bei der Übertragung treten üblicherweise störende Interferenzen auf, insbesondere eine Intersymbolinterferenz (ISI) durch Mehrwegeübertragung und eine Mehrfachnutzerinterferenz (MAI = multiple access interference) durch korrelierte Codes.

Zur Interferenzbehandlung sind folgende Verfahren bekannt:

- eine im Empfänger befindliche Rake-Empfangseinrichtung zur Behandlung der ISI, wie aus John G. Proakis: "Digital Communications", 3. Aufl., McGraw-Hill, New York usw., 1995 bekannt;

- eine gemeinsame Erfassung (JD = Joint Detection) im Empfänger zur Behandlung der ISI und MAI, wie aus A. Klein, G.K. Kaleh und P.W. Baier: Zero Forcing and Minimum Mean-Square-Error Equalization for Multiuser Detection in Code-Division Multiple Access Channels, IEEE Trans. Vehic. Tech., Bd. 45 (1996), 276-287 bekannt;

- ein Pre-Rake-Combining im Sender zur Behandlung der ISI, wie aus R. Esmailzadeh und M. Nakagawa: "Pre-Rake Diversity Combination for Direct Sequence Spread Spectrum Mobile Communications Systems", IEICE Trans. Comm., Bd. E76-B (1993), 1008-1015

- eine gemeinsame Vorentzerrung im Sender zur Behandlung von ISI und MAI.

- Aus DE19909921 A ist ein Datenübertragungsverfahren bekannt, bei dem im Sender einer Basisstation entweder für alle gesendeten Codes eine gemeinsame Vorentzerrung vorgenommen wird oder für alle Codes keine Vorentzerrung, bzw. Interferenzbehandlung. Die Auswahl einer Interferenzbehandlung im Sender oder im Empfänger erfolgt anhand der Änderungsgeschwindigkeit des Funkkanals, die mittels aufeinanderfolgender Kanalschätzungen bestimmt wird.

Eine wichtige Interferenzbehandlung bei dieser Art der Datenübertragung ist die Vorentzerrung im Sender. Eine gemeinsame Vorentzerrung von zu sendenden Datensignalen im Sender ermöglicht einfache Datendetektoren. Bei schnell veränderlichen Übertragungskanälen führt die Vorentzerrung im Sender allerdings zu höheren Fehlerraten als bei Interferenzbehandlungstechniken im Empfänger. Der Sender muss zur Vorentzerrung die Impulsantwort des zu verwendenden Übertragungskanals kennen. Das TDD (Time Division Duplex)-Verfahren ermöglicht die Verschaffung dieser Kenntnis. Der Kanal wird also vor der Datensendung geschätzt.

Als Nachteile des Standes der Technik haben sich herausgestellt:

- die Rake-Empfangseinrichtung eliminiert nicht die MAI;
- die JD ist sehr aufwendig;
- die gemeinsame Vorentzerrung ist nur für langsam veränderliche Kanäle brauchbar.

VORTEILE DER ERFINDUNG

Eine der vorliegenden Erfindung zu Grunde liegende Idee besteht darin, daß eine Kombination gemeinsamer Vorentzerrung im Sender und Interferenzbehandlung im Empfänger durchgeführt wird. Die zu sendenden Signale werden gemeinsam also so vorentzerrt, daß für einige der zu übertragenden Daten Interferenzen im Sender eliminiert werden und die Interferenzen der anderen Daten im Empfänger behandelt werden können.

Dies bringt den besonderen Vorteil, daß sie eine gemeinsame Vorentzerrung und Interferenzbehandlung im Empfänger in einem System ermöglichen. Dadurch ist ein einfacher Empfänger bei langsam veränderlichem Kanal möglich, und gleichzeitig ist eine Übertragung bei schnell veränderlichem Kanal möglich.

Eine weitere der vorliegenden Erfindung zu Grunde liegende Idee besteht darin, daß bei Interferenzbehandlung im Sender die zur Vorentzerrung nötige Kanalschätzung aus mehreren zeitlich zurückliegenden Kanalschätzungen vorhergesagt wird.

Dies bringt den besonderen Vorteil, daß die Kanalschätzung dem Kanal zum Sendezeitpunkt besser entspricht. Dies verbessert die Übertragung bei schnell veränderlichem Übertragungkanal.

Eine weitere der vorliegenden Erfindung zu Grunde liegende Idee besteht darin, daß eine Schätzung der vom Sender benutzten Kanalimpulsantwort durch den Empfänger durchgeführt wird und die Daten unter Verwendung dieser Kanalschätzung detektiert werden.

Dies bringt ebenfalls den besonderen Vorteil, daß die Übertragung bei schnell veränderlichem Übertragungskanal verbessert ist.

In den Unteransprüchen finden sich vorteilhafte Weiterbildungen und Verbesserungen des jeweiligen Gegenstandes der Erfindung.

Gemäß der vorliegen den Erfindung wird die Interferenz-behandlung hinsichtlich mindestens eines Codes bei langsam veränderlichem Übertragungskanal im Sender vorgenommen und wird die Interferenzbehandlung der zu übertragenden Daten hinsichtlich mindestens eines weiteren Codes bei schnell veränderlichem Übertrangungskanal im Empfänger vorgenommen.

Gemäß der vorliegen den Erfindung wird das Datensignal CDMA-codiert.

Gemäß der vorliegen den Erfindung werden die Codes des zu übertragenden Datensignals gemeinsam vorentzerrt, wobei für einige Codes der Dirac-Stoß als Kanalschätzung verwendet wird.

Gemäß der vorliegen den Erfindung werden die Daten mit als Dirac-Stoß vorgenommener Kanalschätzung beim Empfänger durch eine Rake-Empfangseinrichtung detektiert.

Gemäß einer weiteren bevorzugten Weiterbildung wird bei Interferenzbehandlung im Sender die zur Vorentzerrung nötige Kanalschätzung aus mehreren zeitlich zurückliegenden Kanalschätzungen vorhergesagt.

Gemäß einer weiteren bevorzugten Weiterbildung wird die vorherzusagende Kanalschätzung durch lineare Extrapolation aus den zurückliegenden Kanalschätzungen berechnet.

Gemäß einer weiteren bevorzugten Weiterbildung wird eine Schätzung der vom Sender benutzten Kanalimpulsantwort durch den Empfänger durchgeführt und werden die Daten unter Verwendung dieser Kanalschätzung detektiert.

Gemäß einer weiteren bevorzugten Weiterbildung wird das empfangene Signal entsprechend der geschätzten Impulsantwort gefiltert und werden anschließend die Daten mittels einer Rake-Empfangseinrichtung detektiert.

Gemäß einer weiteren bevorzugten Weiterbildung wird die geschätzte Impulsantwort zur Pseudoinversen-Detektion verwendet.

ZEICHNUNGEN

Ein Ausführungsbeispiel der Erfindung ist in der Zeichnung dargestellt und wird in der folgenden Beschreibung näher erläutert.

Es zeigen:

Figur 1    eine Darstellung einer Sendevorrichtung zur Erläuterung einer ersten Ausführrungsform der Erfindung;

Figur 2    eine Darstellung einer Sendevorrichtung zur Erläuterung einer zweiten Ausführrungsform der Erfindung;

Figur 3    eine Darstellung einer Empfangsvorrichtung zur Erläuterung einer dritten Ausführrungsform der Erfindung; und

Figur 4    eine Darstellung einer Schätzungsprozedur der zur Signalsendung verwendeten Kanalschätzung durch die Empfangsvorrichtung nach Fig. 3.

BESCHREIBUNG DER AUSFÜHRUNGSBEISPIELE

In den Figuren bezeichnen gleiche Bezugszeichen gleiche oder funktionsgleiche Komponenten.

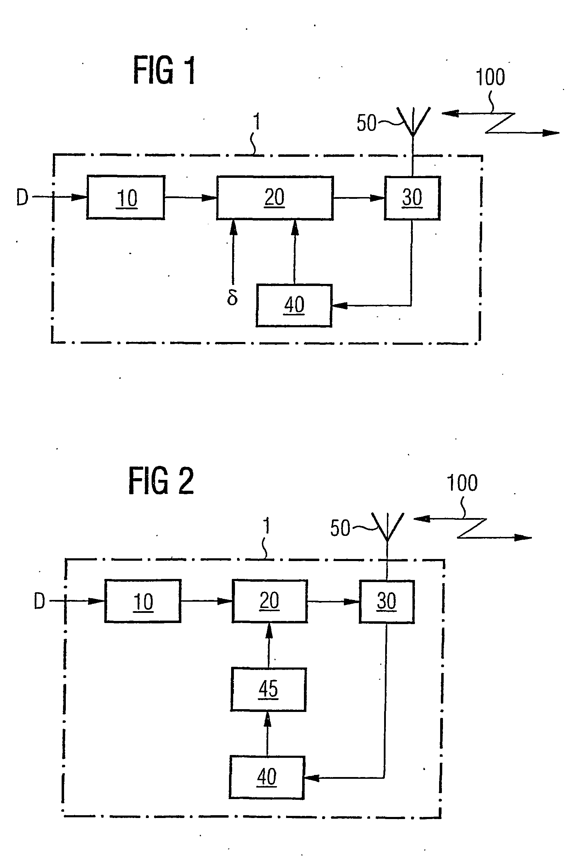

Figur 1 ist eine Darstellung einer Sendevorrichtung zur Erläuterung einer ersten Ausführrungsform der Erfindung.

In Fig. 1 bezeichnen 1 einen Sender; D zu übertragende Daten; 10 einen Modulator; 20 einen Vorentzerrer; 30 einen Switch bzw. Schalter; 40 eine Kanalschätzeinrichtung; $\delta$ Dirac-Stöße; 50 eine Antenne und 100 eine TDD-Funkverbindung.

Bei dieser ersten Ausführungsform findet eine Kombination von gemeinsamer Vorentzerrung und Rake-Empfang Anwendung.

Es wird durch eine Entscheidungseinrichtung im Sender in Abhängigkeit von mindestens einem Datenübertragungsparameter entschieden, ob eine Interferenzbehandlung des zu übertragenden Datensignals im Sender 1 oder im Empfänger vorgenommen wird. Der Datenübertragungsparameter kann z.B. die Änderungsgeschwindigkeit des Datenkanals sein oder ein Maß dafür.

Wird für bestimmte Datencodes entschieden, daß die Interferenzbehandlung im Sender 1 vorgenommen wird, so findet eine gemeinsame Vorentzerrung statt. Dabei werden Kanalschätzungen für Verbindungen mit Interferenzbehandlung im Empfänger als Dirac-Stoß gewählt (Deltafunktion - Impulsantwort eines idealen Kanals). Die Detektion der Daten mit Dirac-Stoß-Kanalschätzung erfolgt mittels einer Rake-Empfangseinrichtung im Empfänger.

Figur 2 zeigt eine Darstellung einer Sendevorrichtung zur Erläuterung einer zweiten Ausführungsform der Erfindung.

In Fig. 2 bezeichnet zusätzlich zu den bereits eingeführten Bezugszeichen 45 einen Extrapolator.

Zur Vorentzerrung der zu versendenden Datensignale muß die Impulsantwort des aktuellen Übertragungskanals im Sender 1 bekannt sei. Der Kanal kann aber nur eine gewisse Zeit vor der Sendung geschätzt werden. Diese Schätzung weicht um so stärker vom aktuellen Kanal ab, je schneller sich der Kanal ändert. Daher wird die Datenübertragung z.B. bei hohen relativen Geschwindigkeiten zwischen Empfänger und Sender sehr fehlerhaft.

Bei dieser zweiten Ausführungsform wird die Impulsantwort des aktuellen Kanals aus mehreren zeitlich zurückliegenden Kanalschätzungen vorhergesagt bzw. durch den Extrapolator 45 z.B. linear extrapoliert. Dies führt zu einer deutlichen Verbesserung der Übertragung bei schnell veränderlichem Kanal.

Die Schätzung der Kanal-Impulsantworten durch den vorentzerrenden Sender 1 erfolgt dabei während Zeitabschnitten, in denen diese Station Daten empfängt. Die lineare Extrapolation der während des Datenempfangs geschätzten KanalImpulsantworten wird auf den Sendezeitraum angelegt. Die Vorentzerrung des Sendesignals erfolgt entsprechend der extrapolierten Kanalschätzung.

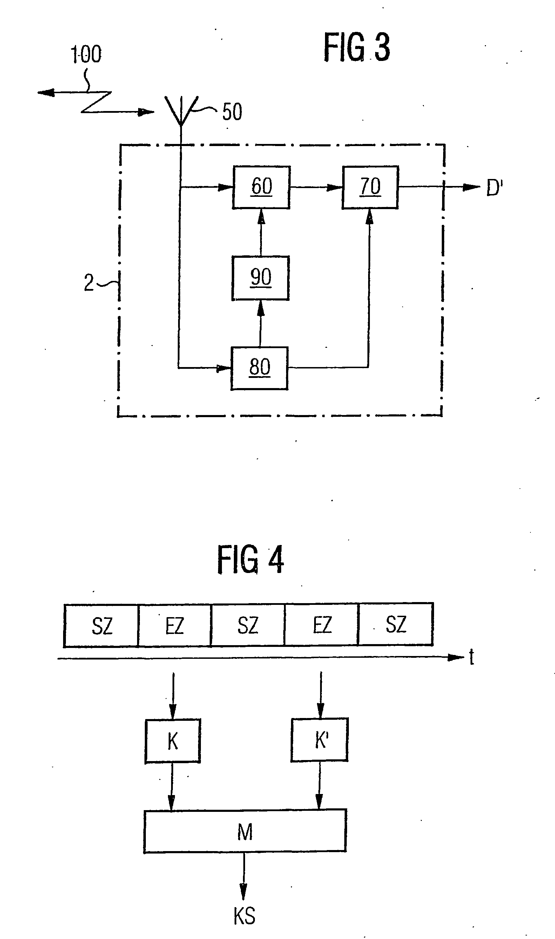

Figur 3 ist eine Darstellung einer Empfangsvorrichtung zur Erläuterung einer dritten Ausführungsform der Erfindung, und Figur 4 ist eine Darstellung einer Schätzungsprozedur der zur Signalsendung verwendeten Kanalschätzung durch die Empfangsvorrichtung bach Fig. 3.

In Fig. 3 und 4 bezeichnen zusätzlich zu den bereits eingeführten Bezugszeichen 2 einen Empfänger; 60 einen Filter; 70 eine Rake-Empfangseinrichtung; 80 eine Kanalschätzeinrichtung; 90 eine Einrichtung zur Schätzung der bei der Sendung verwendeten Kanalschätzung; D' empfangene Daten; SZ einen Sendezeitabschnitt; EZ einen Empfangszeitabschnitt; K, K' Kanalschätzungen; M eine Mittelung; KS eine Kanalschätzung für den Sendezeitabschnitt sowie t die Zeit.

Die zur Vorentzerrung verwendete Kanal-Impulsantwort wird bei dieser Ausführungsform im Empfänger 2 geschätzt. Unter Verwendung dieser Schätzung wird die Vorentzerrung im Empfänger berücksichtigt, und die Daten werden mit Interferenz behandelnden Methoden detektiert.

Bei einem ersten Beispiel zu dieser Ausführungsform liegt eine Punkt zu Mehrpunkt-Vorentzerrung mit Rake-Empfang vor, wie in Fig. 3 illustriert.

Es findet TDD-Betrieb mit regelmäßig alternierenden Empfangs- und Sendezeitabschnitten EZ/SZ, mit Code-Vielfachzugriff (CDMA = Code division multiple access) statt.

Dabei wird eine Schätzung der vom Sender (vorentzerrende Station) benutzten Kanalimpulsantwort durch den Empfänger (Rake-Station) durchgeführt. Diese Schätzung des Kanals wird während Zeitabschnitten durchgeführt, die den Zeitabschnitt umschließen, der in der vorentzerrenden Sendestation zur Kanalschätzung verwendet wird (Sendezeitabschnitt der Rake-Station = Empfangszeitabschnitt der vorentzerrenden Station). Anschließend findet eine Mittelung der beiden Kanalschätzungen statt.

Der Filter 60 wird mit dieser geschätzten Impulsantwort auf das empfangene Signal angewendet.

Schließlich findet eine Datendetektion durch die Rake-Empfangseinrichtung 70 statt.

Bei einem zweiten Beispiel zu dieser Ausführungsform liegt eine Punkt zu Mehrpunkt-Vorentzerrung mit Pseudoinversen-Detektion unter Verwendung der gemittelten Kanalschätzung anstatt der Rake-Detektion vor.

Es sei ein zeitdiskretes CDMA-Übertragungssystem mit blockweiser Übertragung vorausgesetzt. Sei $\underline{d}^{(k)} = (d^{(k)}_1,...,d^{(k)}_M)$, k = 1, ..., K der Vektor der M zu übertragenden Datensymbole des k-ten Nutzers. CDMA-Kodierung und Vorentzerrung sind lineare Abbildungen der Datenvektoren $\underline{d}^{(k)}$ auf die zu sendenden Signalvektoren $\underline{s}^{(k)}$. Diese Vektoren werden zum Gesamtsignal s aufsummiert und vom Sender abgestrahlt:

$$\underline{S}^T = \sum_{k=1}^{K} B^{(k)} \cdot \underline{d}^{(k)^T}$$

$\underline{d}^{(k)}{}_T$ bezeichnet den transponierten Vektor $\underline{d}^{(k)}$. $B^{(k)}$ ist die Kodierung und Vorentzerrung enthaltene $(M \cdot Q + W - 1) \times M$ Abbildungs-Matrix mit dem Spreizungsfaktor Q der CDMA-Codes und der Länge W der bei der Vorentzerrung verwendeten Kanalschätzungen.

Das Signal $\underline{s}$ wird über den k-ten Übertragungskanal zum k-ten Nutzer übertragen. Sei $\underline{h}^{(k)} = (h_1^{(k)},...,h_W^{(k)})$ die Impulsantwort dieses Kanals und

$$H^{(k)} = \begin{pmatrix} h^{(k)}_1 & 0 & 0 \\ \vdots & \ddots & 0 \\ h^{(k)}_W & \vdots & h^{(k)}_1 \\ 0 & \ddots & \vdots \\ 0 & 0 & h^{(k)}_W \end{pmatrix} \Bigg\} M \cdot Q + W - 1 + W - 1$$

$$\underbrace{\phantom{M \cdot Q + W - 1}}_{M \cdot Q + W - 1}$$

die entsprechende Faltungsmatrix. Bei additivem Rauschen $\underline{n}^{(k)}$ des Kanals empfängt der k-te Nutzer dann das Signal

$$\underline{r}^{(k)T} = \sum_{l=1}^{K} H^{(k)} \cdot B^{(l)} \cdot \underline{d}^{(l)T} + \underline{n}^{(k)}$$

Mit der Empfangsmatrix $R^{(k)} = (B^{(k)H} \cdot H^{(k)H} \cdot H^{(k)} \cdot B^{(k)})^{-1} \cdot B^{(k)H} \cdot H^{(k)H}$ gewinnt der Empfänger daraus Schätzungen $\hat{\underline{d}}$ der gesendeten Daten gemäß

$$\hat{\underline{d}}^{(k)T} = R^{(k)} \cdot \underline{r}^{(k)T}$$

$H^{(k)H}$ bezeichnet die konjugiert komplexe und transponierte Matrix $H^{(k)}$.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Die Erfindung kann überall dort angewendet werden, wo zu sendende Signale vorentzerrt werden sollen und gleichzeitig Verbindungen über schnell veränderliche Kanäle benötigt werden, insbesondere in TDD-Funkübertragungssystemen mit Vorentzerrung.

## Patentansprüche

1. Datenübertragungsverfahren, bei dem ein codiertes Datensignal (D) in Form eines Datenstroms von Datenbursts zwischen einem Sender (1) und einem Empfänger (2) übertragen wird, wobei in Abhängigkeit von mindestens einem Datenübertragungsparameter entschieden wird, ob eine Interferenzbehandlung (20, 70) des zu übertragenden Datensignals im Sender (1) oder im Empfänger (2) vorgenommen wird, wobei das Datensignal (D) CDMA-codiert wird, wobei als Übertragungsparameter eine Änderungsgeschwindigkeit eines Übertragungskanals oder ein Maß dafür gewählt wird, um zu entscheiden, wie die Interferenzbehandlung (20, 70) vorgenommen wird, wobei die Interferenzbehandlung (20) hinsichtlich mindestens eines Codes bei langsam veränderlichem Übertragungskanal im Sender (1) vorgenommen wird, und wobei die Interferenzbehandlung (70) hinsichtlich mindestens eines weiteren Codes bei schnell veränderlichem Übertragungskanal im Empfänger (2) vorgenommen wird, **dadurch gekennzeichnet, dass** die Codes des zu übertragenden Datensignals (D) gemeinsam vorentzerrt werden, wobei für einige Codes der Dirac-Stoß ($\delta$) als Kanalschätzung (40) verwendet wird, und dass die Daten mit als Dirac-Stoß ($\delta$) vorgenommener Kanalschätzung (40) beim Empfänger (2) durch eine Rake-Empfangseinrichtung (70) detektiert werden.

2. Verfahren nach Anspruch 1, **dadurch gekennzeichnet, dass** bei Interferenzbehandlung (20) im Sender (1) die zur Vorentzerrung nötige Kanalschätzung (40) aus mehreren zeitlich zurückliegenden Kanalschätzungen vorhergesagt wird.

3. Verfahren nach Anspruch 2, **dadurch gekennzeichnet, dass** die vorherzusagende Kanalschätzung (40) durch lineare Extrapolation aus den zurückliegenden Kanalschätzungen berechnet wird.

4. Verfahren nach einem der vorhergehenden Ansprüche, **dadurch gekennzeichnet, dass** eine Schätzung (90) der vom Sender (1) zur Vorentzerrung benutzten Kanalimpulsantwort durch den Empfänger (2) durchgeführt wird und die Daten unter Verwendung dieser Kanalschätzung detektiert werden.

5. Verfahren nach Anspruch 4, **dadurch gekennzeichnet, dass** das empfangene Signal entsprechend der geschätzten Impulsantwort gefiltert (60) wird und anschließend die Daten mittels einer Rake-Empfangseinrichtung (70) detektiert werden.

6. Verfahren nach Anspruch 4, **dadurch gekennzeichnet, dass** die geschätzte Impulsantwort zur Pseudoinversen-Detektion verwendet wird.

7. Verfahren nach Anspruch 4, **dadurch gekennzeichnet, dass** die Schätzung (80) des Kanals während Zeitabschnitten (EZ) durchgeführt wird, die den Zeitabschnitt umschließen, der in der vorentzerrenden Sendestation (1) zur Kanalschätzung (40) verwendet wird.

8. Verfahren nach Anspruch 7, **dadurch gekennzeichnet, dass** anschließend eine Mitteilung (M) der Kanalschätzungen (K, K') stattfindet.

**Claims**

1. Data transmission method in which a coded data signal (D) in the form of a data stream of data bursts is transmitted between a transmitter (1) and a receiver (2), wherein it is decided in dependence on at least one data transmission parameter whether an interference control (20, 70) of the data signal to be transmitted is undertaken in the transmitter (1) or in the receiver (2), wherein the data signal (D) is CDMA-coded, wherein a rate of change of a transmission channel or a measure of this is selected as transmission parameter in order to decide how the interference control (20, 70) will be undertaken, wherein the interference (20) is undertaken in the transmitter (1) with regard to at least one code in the case of a slowly variable transmission channel and wherein the interference control (70) is undertaken in the receiver (2) with regard to at least one further code in the case of a rapidly variable transmission channel, **characterized in that** the codes of the data signal (D) to be transmitted are pre-equalized jointly, wherein the Dirac pulse ($\delta$) is used as channel estimate (40) for some codes, and **in that** the data with channel estimate (40) undertaken as Dirac pulse ($\delta$) are detected at the receiver (2) by a rake receiving device (70).

2. Method according to Claim 1, **characterized in that**, in the case of interference control (20) in the transmitter (1), the channel estimate (40) necessary for pre-equalization is predicted from a number of previous channel estimates.

3. Method according to Claim 2, **characterized in that** the channel estimate (40) to be predicted is calculated by a linear extrapolation from the previous channel estimates.

4. Method according to one of the preceding claims, **characterized in that** an estimate (90) of the channel impulse response used by the transmitter (1) for pre-equalization is carried out by the receiver (2) and the data are detected by using this channel estimate.

5. Method according to Claim 4, **characterized in that** the received signal is filtered (60) in accordance with the estimated impulse response and subsequently the data are detected by means of a rake receiving device (70).

**6.** Method according to Claim 4, **characterized in that** the estimated impulse response is used for pseudo-inverse detection.

**7.** Method according to Claim 4, **characterized in that** the estimate (80) of the channel is carried out during time intervals (EZ) which enclose the time interval which is used for the channel estimate (40) in the pre-equalizing transmitting station (1).

**8.** Method according to Claim 7, **characterized in that**, subsequently, an averaging (M) of the channel estimates (K, K') takes place.

**Revendications**

**1.** Procédé de transmission de données, selon lequel un signal de données (D) codé est transmis sous la forme d'un flux de données de salves de données entre un émetteur (1) et un récepteur (2), une décision étant prise en fonction d'au moins un paramètre de transmission de données pour savoir s'il faut effectuer un traitement des interférences (20, 70) du signal de données à transmettre dans l'émetteur (1) ou dans le récepteur (2), le signal de données (D) étant codé CDMA, le paramètre de transmission choisi étant une vitesse de variation d'un canal de transmission ou un indice de celle-ci afin de décider comment sera effectué le traitement des interférences (20, 70), le traitement des interférences (20) du point de vue d'au moins un code étant effectué dans l'émetteur (1) en présence d'un canal de transmission à variation lente et le traitement des interférences (70) du point de vue d'au moins un code supplémentaire étant effectué dans le récepteur (2) en présence d'un canal de transmission à variation rapide, **caractérisé en ce que** les codes du signal de données (D) à transmettre sont préaccentués ensemble, l'impulsion de Dirac ($\delta$) étant utilisée comme estimation du canal (40) pour un code unique et **en ce que** les données avec une estimation du canal (40) effectuée sous la forme de l'impulsion de Dirac ($\delta$) sont détectées au niveau du récepteur (2) par un dispositif de réception Rake (70).

**2.** Procédé selon la revendication 1, **caractérisé en ce que** lors du traitement des interférences (20) dans l'émetteur (1), l'estimation du canal (40) nécessaire pour la préaccentuation est prédite à partir de plusieurs estimations du canal antérieures dans le temps.

**3.** Procédé selon la revendication 2, **caractérisé en ce que** l'estimation du canal (40) à prédire est calculée par extrapolation linéaire à partir des estimations du canal antérieures.

**4.** Procédé selon l'une des revendications précédentes, **caractérisé en ce qu'**une estimation (90) de la réponse à l'impulsion de canal utilisée par l'émetteur (1) pour la préaccentuation est effectuée par le récepteur (2) et les données sont détectées en utilisant cette estimation de canal.

**5.** Procédé selon la revendication 4, **caractérisé en ce que** le signal reçu est filtré (60) conformément à la réponse à l'impulsion estimée et les données sont ensuite détectées au moyen d'un dispositif de réception Rake (70).

**6.** Procédé selon la revendication 4, **caractérisé en ce que** la réponse à l'impulsion estimée est utilisée pour la détection pseudo-inverse.

**7.** Procédé selon la revendication 4, **caractérisé en ce que** l'estimation (80) du canal est effectuée pendant des portions de temps (EZ) qui incluent la portion de temps qui est utilisée dans la station émettrice (1) à préaccentuation pour l'estimation du canal (40).

**8.** Procédé selon la revendication 7, **caractérisé en ce qu'**une communication (M) des estimations du canal (K, K') a ensuite lieu.

## FIG 1

## FIG 2

## FIG 3

100

50

2

60 → 70 → D'

90

80

## FIG 4

| SZ | EZ | SZ | EZ | SZ |
|----|----|----|----|----|

→ t

K

K'

M

KS

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19909921 A

**In der Beschreibung aufgeführte Nicht-Patentliteratur**

- Nachrichtenübertragung. **K. D. KAMMEYER.** Reihe Informationstechnik. Teubner, 1996
- **JOHN G. PROAKIS.** Digital Communications. Mc-Graw-Hill, 1995
- **A. KLEIN ; G.K. KALEH ; P.W. BAIER.** Zero Forcing and Minimum Mean-Square-Error Equalization for Multiuser Detection in Code-Division Multiple Access Channels. *IEEE Trans. Vehic. Tech.,* 1996, vol. 45, 276-287
- **R. ESMAILZADEH ; M. NAKAGAWA.** Pre-Rake Diversity Combination for Direct Sequence Spread Spectrum Mobile Communications Systems. *IEICE Trans. Comm.,* 1993, vol. E76-B, 1008-1015